# EUROPEAN PATENT APPLICATION

(11) **EP 2 056 537 A1**
(43) Date of publication of application: **06.05.2009**
(21) Application number: 07720718.1
(22) Date of filing: 09.04.2007
(51) Int. Cl.: H04L 12/54

(54) **A METHOD, APPARATUS AND SYSTEM FOR FORWARDING SIGNALING**

(30) Priority: 23.08.2006 CN 200610111556
(71) Applicant: Huawei Technologies Co., Ltd., Longgang District, Shenzhen Guangdong 518129 (CN)
(72) Inventor: CHAI, Xinzhong, Shenzhen Guangdong 518129 (CN)
(74) Representative: Gulde Hengelhaupt Ziebig & Schneider
(86) International application number: PCT/CN2007/001145
(87) International publication number: WO 2008/025199

(57) **Abstract**

A method for forwarding signaling includes steps: the signaling forwarding apparatus creates the address mapping table according to the carried address information in the login message after receiving the login message; matching to the address mapping table and forwarding signaling. A apparatus for forwarding signaling includes: signaling receiving unit for receiving signaling, said signaling comprises the login message and the call message; address mapping table creation unit for creating the address mapping table according to the carried address information in said login message; signaling forwarding unit for forwarding signaling accordingto the address mapping table. Also, a system for forwarding signaling includes the terminal, the dynamic address allocating server, the address translating device, and the signaling forwarding apparatus.; The present invention may implement traversal through NAT in order to forwarding successfully.

## Description

This application claims the priority of Chinese patent application No. 200610111556.3, entitled "Signaling Transfer Method and Device" and filed with the Chinese Patent Office on August 23, 2006, contents of which are incorporated herein by reference in its entirety.

### Field of the Invention

The present invention relates to the field of communication and in particular to a method, device and system for signaling transfer.

### Background of the Invention

In the field of Next Generation Networking (NGN), the signaling trends to be separated from media. For the purpose of the separation of signaling from media, a forwarding device is controlled by a signaling device. Typically, a Gateway accomplishes the transfer of signaling and a media message, a Gateway Controller (GC) performs a control on the Gateway, and a Call Agent (CA) accomplishes a call control. The GC and the CA may be physically located at a same device or at separate devices.

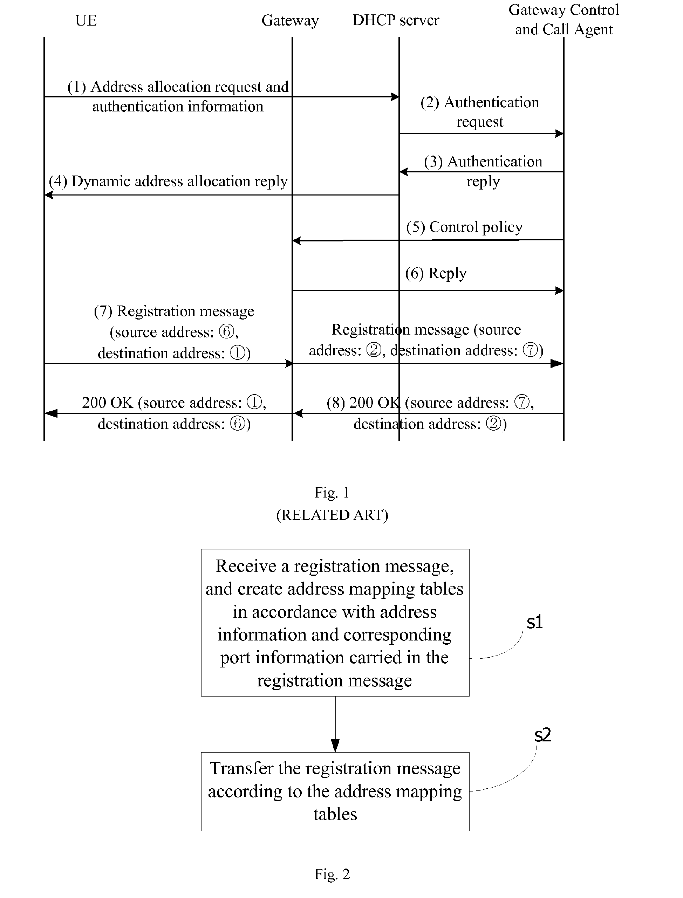

With reference to Figure 1, a signaling transfer procedure in a related art (by way of an example of registration message transfer) includes the following steps:

(1) An NGN User Equipment (UE) goes on line, and sends an address allocation request and authentication information to a Dynamic Host Configuration Protocol (DHCP) server;

(2) The DHCP server sends an authentication request (including a UE address ⑥ and the authentication information) to a Gateway Controller/Call Agent (GC/CA);

(3) The GC/CA returns an authentication reply (200 OK) message to the DHCP server;

(4) The DHCP server returns to the UE the allocated addresses including the UE address ⑥, a Gateway address and a Session Initiation Protocol (SIP) server address ①;

(5) The GC/CA delivers a Protocol Control Policy (PCP) to the Gateway, and the Gateway creates a address mapping table (⑥-->① .. ②-->⑦, in other words, ⑥ is mapped to ②, ① is mapped to ⑦), where ⑥ denotes the UE address, ① denotes the SIP server address, ② denotes an address in a Gateway address pool, and ⑦ denotes the GC/CA address;

(6) The Gateway returns a reply message to the GC/CA, indicating that the address mapping table has been created;

(7) The UE sends to the GC/CA a registration message carrying a client source address of ⑥ and a client destination address of ①. After the registration message reaches the Gateway, the Gateway modifies address information in the header of the registration message in accordance with the address mapping table created previously, and forwards to the GC/CA the registration message including information of a server source address of ② and a server destination address of ⑦;

(8) The GC/CA returns to the UE a 200 OK message, with the original server source address of ② changed into the server destination address, and the original server destination address of ⑦ changed into the server source address. Upon arrival of the 200 OK message at the Gateway, the Gateway modifies address information in the header of the message in accordance with the address mapping table created previously, so that the original client source address of ⑥ is changed into the client destination address, and the original client destination address of ① is changed into the client source address, and then transfers the message to the UE;

Thus, the transfer of the registration message is finished.

Currently, Network Address Translation (NAT) devices are widely used due to scarce Internet Protocol (IP) addresses. When an NAT device is provided between the UE and the Gateway, the real UE address ⑥ is used for an upstream session (the transfer of signaling from the NGN UE to the network side is referred to as an upstream, otherwise a downstream), however, after the signaling passes through the NAT device, the source address in the message header is not the UE address ⑥. Therefore, the message arriving at the Gateway does not match the table (⑥-->① .. ②-->⑦) created previously, resulting in a mismatch of the signaling with the already established session, and further a failure in the signaling transfer.

Further, the GC/CA triggers the Gateway to create the address mapping table in accordance with the addresses allocated by the DHCP server. Here, the client source address in the mapping table contains no port information, while the client source address in the message header contains port information of the registration message. After a registration message is transferred to the Gateway, a match of the registration message with the created address mapping table is determined. Upon such a match, the port information of the client source address in the registration message is added into the address mapping table, and the message is transferred to the GC/CA. During the above procedure, if a malicious UE sends a message including the same client source address and different port information, then the Gateway replaces the port information corresponding to the original client addresses in the original address mapping table with the new port information. Consequently, when the GC/CA transfers a downstream session to the Gateway, the mismatch of the address information carried during the session with the current address mapping table in the Gateway may cause a failure in the signaling transfer.

### Summary of the Invention

Embodiments of the invention provide a signaling transfer method, device and system, which may enable successful transfer of signaling passing through an NAT device.

An embodiment of the invention provides a signaling transfer method including:
creating, by a signaling transfer device, an address mapping table in accordance with address information carried in a registration message upon receipt of the registration message; and
transferring signaling in accordance with the address mapping table.

Another embodiment of the invention provides a signaling transfer device including:
a signaling reception element adapted to receive signaling including a registration message and a call message;
an address mapping table creation element adapted to create an address mapping table in accordance with address information carried in the registration message; and
a signaling transfer element adapted to transfer the signaling in accordance with the address mapping table.

A further embodiment of the invention provides a signaling transfer system including a UE, a Dynamic Host Configuration Protocol server, and a Network Address Translation device, where the system further includes a signaling transfer device including:
a signaling reception element adapted to receive, from the UE, signaling including a registration message and a call message;
an address mapping table creation element adapted to create an address mapping table in accordance with address information carried in the registration message; and
a signaling transfer element adapted to transfer the signaling in accordance with the address mapping table.

In the embodiments of the invention, the signaling transfer device is triggered to create the address mapping table after the registration message is sent, thereby avoiding a failure in the signaling transfer due to a source IP address change in the registration message when the signaling sent from the UE arrives at the signaling transfer device by passing through the NAT device, and further ensuring successful transfer of the signaling.

### Brief Descriptions of the Drawings

Figure 1 is a diagram showing the registration message transfer in a related art;

Figure 2 is a flow chart of a method according to an embodiment of the invention;

Figure 3 is a flow chart of the registration message transfer according to an embodiment of the invention;

Figure 4 is a flow chart of creating an address mapping table according to an embodiment of the invention;

Figure 5 is a flow chart of the call message transfer according to an embodiment of the invention;

Figure 6 is a schematic diagram of a structure of a signaling transfer device according to an embodiment of the invention; and

Figure 7 is a block diagram of a signaling transfer system according to an embodiment of the invention.

### Detailed Descriptions of the Embodiments

Embodiments of the invention provide a signaling transfer method, device and system for accomplishing signaling transfer. Upon receiving a registration message, a signaling transfer device creates an address mapping table in accordance with address information carried in the registration message, and then transfers signaling in accordance with the address mapping table, thereby accomplishing successful transfer of the signaling passing through an NAT device. Here, the transferred signaling includes a registration message and a call message, and a UE firstly performs signaling registration, and then transfers the call message, thereby establishing a call connection.

With reference to Figure 2, a flow chart of the method according to an embodiment of the invention is shown, including the following.

s1) Upon receiving a registration message, a signaling transfer device creates an address mapping table in accordance with address information carried in a header of the registration message; and

s2) Signaling is transferred in accordance with the address mapping table.

Specific embodiments are provided in the present invention according to the above method. Although the embodiments of the invention are illustrated in a case when an NAT device is present between a UE and the signaling transfer device, embodiments of the invention in a case when no NAT device is present between the UE and the signaling transfer device shall not be excluded. Further, although a GC and a CA in the embodiments of the invention are illustrated as located on the same device, applications of the embodiments of the invention in a case when the GC and the CA are not located on the same device shall not be excluded.

It shall be noted that functions of the signaling transfer device in the embodiments of the invention can be implemented by a Gateway, and corresponding functions of control and call agent for signaling transfer device can be implemented by a Gateway Control and Call Agent.

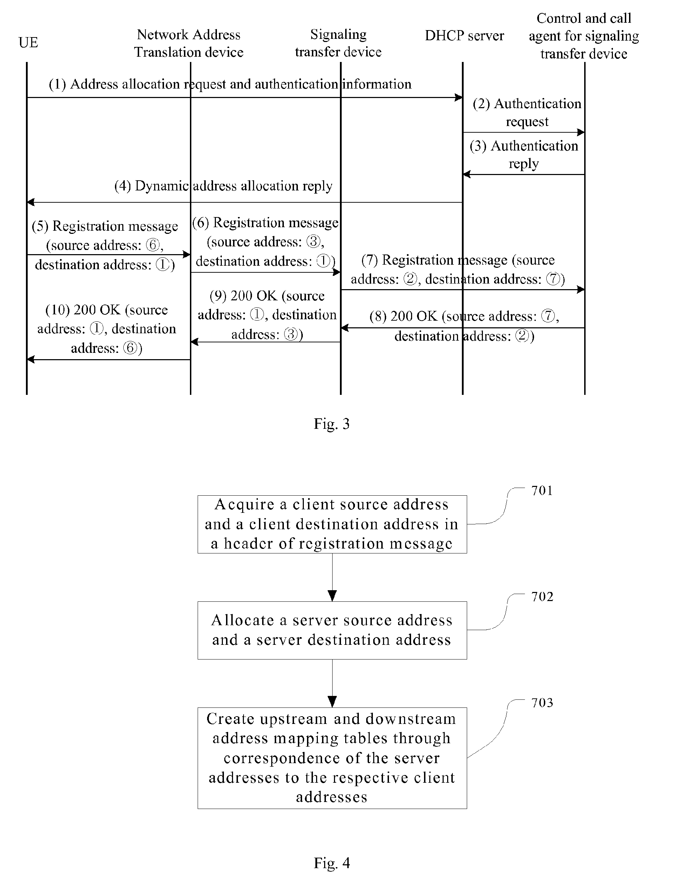

With reference to Figure 3, a flow chart of registration message transfer according to an embodiment of the invention is shown including the following steps:

(1) An NGN UE goes on line, and sends an address allocation request and an authentication information to a DHCP server;

(2) The DHCP server sends an authentication request (including a UE address ⑥ and the authentication information) to the control and call agent for signaling transfer device;

(3) The control and call agent for signaling transfer device returns an authentication reply (200 OK) message to the DHCP server;

(4) The DHCP server returns to the UE the allocated addresses including the UE address ⑥, a default signaling transfer device IP address and an SIP server IP address ①;

(5) In accordance with the obtained SIP server address, the UE sends a registration message to the SIP server for registration, and a header of the message carries a client source address being ⑥ and its corresponding port, and a client destination address being ① and its corresponding port;

(6) Source address conversion is performed on the registration message passing through the NAT device, in other words, the client source address in the message header is changed into ③, and the client destination address remains unchanged;

(7) Upon receiving the registration message, the signaling transfer device creates an address mapping table in accordance with the address information carried in the registration message, and transfers the registration message to the control and call agent for signaling transfer device in accordance with address mapping relationships in the address mapping table;

(8) Upon receipt of the registration message, the control and call agent for signaling transfer device returns a 200 OK message to the signaling transfer device, where an original server source address ② is changed into the server destination address, and an original server destination address⑦ is changed into the server source address;

(9) Upon arrival of the 200 OK message at the signaling transfer device, the signaling transfer device determines a match of the 200 OK message with a downstream address mapping table created previously, replaces the addresses in the message header, in other words, the original client source address of ③ is changed into the client destination address, and the original client destination address of ① is changed into the client source address, and transfers the message to the NAT device.

(10) The NAT device performs address conversion, thereby changing the client destination address from ③ to ⑥, and the 200 OK message is transferred to the UE.

Thus, the transfer of the registration message is finished.

Hereinafter, a specific approach of creating an address mapping table is described. The procedure of this approach is shown in Figure 4, including the following.

701: A client source address and a client destination address in a header of a registration message are obtained.

Upon receipt of the registration message, the signaling transfer device firstly reads address information in the header of the registration message, i.e., a client source address and a client destination address. Here, the address information includes a client source IP address and its corresponding port, and a client destination address IP address and its corresponding port.

702: A server source address and a server destination address are allocated.

The signaling transfer device searches for and allocates a server source address ② from its address pool, and searches for and uses an address of the control and call agent for signaling transfer device as a server destination address ⑦. Here, the server source address includes a server source IP address and its corresponding port, and the server destination address includes a server destination IP address and its corresponding port.

703: Upstream and downstream address mapping tables are created through the correspondence between server addresses and respective client addresses.

An upstream address mapping table is created through the correspondence between the server source address ② and the client source address ③, and the correspondence between the server destination address ⑦ and the client destination address ①.

A downstream address mapping table is created through the correspondence between the client source address ① and the server source address ⑦, and the correspondence between the client destination address ③ and the server destination address ②.

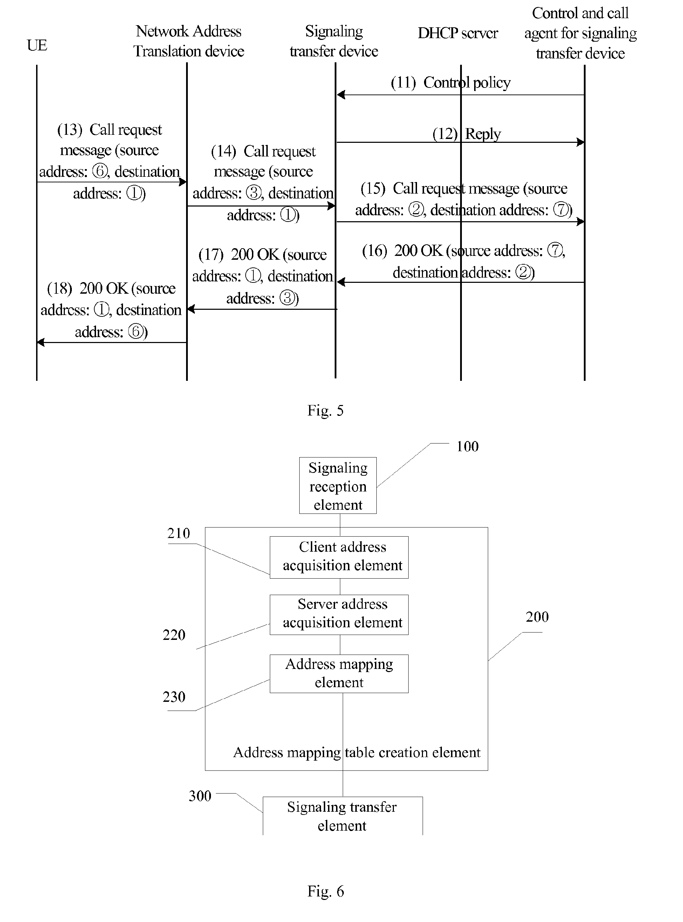

After the signaling registration, in other words, after the registration message is transferred, a call message transfer starts. With reference to Figure 5, a flow of transferring the call message includes the following steps:

(11) The control and call agent for signaling transfer device delivers a control policy to the signaling transfer device, to control the transfer of the call message, discard or transfer the message as required. This control policy can be defined specifically based upon factors such as a call status and a link status.

(12) Upon receipt of the control policy, the signaling transfer device returns to the control and call agent for signaling transfer device a reply message indicating reception of a control policy message.

The steps (11) and (12) indicate a procedure in which the control and call agent for signaling transfer device delivers the control policy to the signaling transfer device. The control policy can be delivered at any time during transfer of the call message, in other words, the procedure of transferring the call message according to the embodiment of the invention has no restriction on the time at which to deliver the control policy.

(13) The UE sends the call message to the SIP server in accordance with the obtained SIP server addresses, a header of the call message carries a client source address being ⑥ and its corresponding port, and a client destination address being ① and its corresponding port.

(14) Source address conversion is performed on the call message passing through the NAT device, so that the client source address in the message header is changed to ③, and the client destination address remains unchanged.

(15) Upon arrival of the call message at the signaling transfer device, a match of the call message with the address mapping table created in the step (7) is determined, and the call message is transferred to the control and call agent for signaling transfer device.

(16) Upon receipt of the call message, the control and call agent for signaling transfer device returns a 200 OK message to the signaling transfer device, where the original server source address ② is changed into the server destination address, and the original server destination address ⑦ is changed into the server source address;

(17) Upon arrival of the 200 OK message at the signaling transfer device, a match of the 200 OK message with the downstream address mapping table created in the step (7) is determined, and the addresses in the message header is replaced, in other words, the original client source address ③ is changed into the client destination address, and the original client destination address ① is changed into the client source address, and the message is transferred to the NAT device.

(18) The NAT device performs address conversion, thereby changing the client destination address from ③ to ⑥, and the 200 OK message is transferred to the UE.

Thus, the transfer of the call message is finished, and a call connection is established between the UE and the control and call agent for signaling transfer device.

With reference to Figure 6, a schematic diagram of the signaling transfer device according to an embodiment of the invention is shown, including:

a signaling reception element 100 adapted to receive signaling;

an address mapping table creation element 200 adapted to create an address mapping table in accordance with address information carried in a header of a registration message;

a signaling transfer element 300 adapted to transfer signaling in accordance with the address mapping table.

Particularly, the address mapping table creation element 200 includes:

a client address acquisition element 210 adapted to acquire, upon receiving a registration message sent by the signaling reception element 100, a client source address and a client destination address within the header of the registration message;

a server address allocation element 220 adapted to allocate a server source address and a server destination address;

an address mapping element 230 adapted to create upstream and downstream address mapping tables through the correspondence between the server addresses and the respective client addresses.

The address mapping element 230 may include:

an upstream address mapping sub-element adapted to create the upstream address mapping table through correspondence between the server source address and the client source address and correspondence between the server destination address and the client destination address;

a downstream address mapping sub-element adapted to create the upstream address mapping table through correspondence between the client source address and the server source address and correspondence between the client destination address and the server destination address.

Specifically, the addresses in the address mapping table created by the address mapping creation element 200 are IP addresses. The address mapping table created by the address mapping creation element 200 also include port information in addition to the IP addresses.

It could be understood that functions of the signaling transfer device in the embodiments of the invention can be implemented by a Gateway, and corresponding functions of the control and call agent for signaling transfer device can be implemented by a Gateway Control and Call Agent.

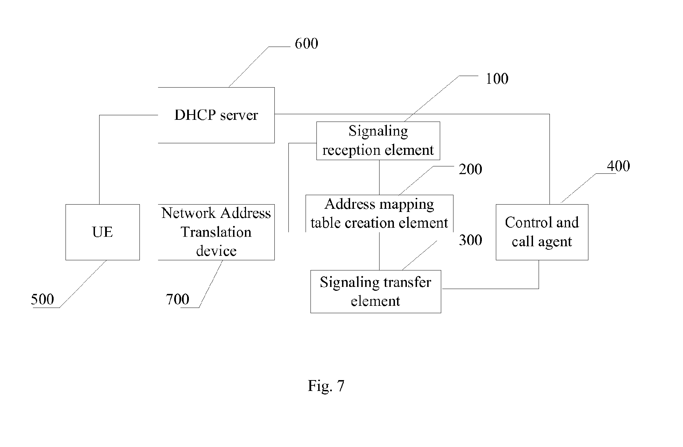

As illustrated in Figure 7, a block diagram of a signaling transfer system according to an embodiment of the invention is shown, including a UE 500, a Dynamic Host Configuration Protocol server 600, a Network Address Translation device 700 and a signaling transfer device. The signaling transfer device includes the signaling reception element 100, the address mapping table creation element 200 and the signaling transfer element 300.

It shall be noted that the signaling transfer system according to the embodiment of the invention may further include a control and call agent 400 adapted to deliver a policy to the signaling transfer element.

Hereinafter, a procedure in which the signaling transfer system according to the embodiment of the invention transfers signaling will be described in detail with reference to Figure 7, the procedure includes:

(1) A UE 500 goes on line, and sends an address allocation request and authentication information to the Dynamic Host Configuration Protocol server 600;

(2) The Dynamic Host Configuration Protocol server 600 sends an authentication request (including an address ⑥ acquired by the UE and the authentication information) to the control and call agent 400;

(3) The control and call agent 400 returns an authentication reply (OK) message to the Dynamic Host Configuration Protocol server 600;

(4) The Dynamic Host Configuration Protocol server 600 returns to the UE 500 the allocated addresses including the UE address ⑥, a default signaling transfer device IP address and an SIP server IP address ①;

(5) In accordance with the obtained SIP server address, the UE 500 sends a registration message REGISTER to the SIP server, and a header of the message carries a client source address being ⑥ and its corresponding port, and a client destination address being ① and its corresponding port;

(6) Source address conversion is performed on the registration message passing through the NAT device 700, so that the client source address in the message header is changed to ③, and the client destination address remains unchanged;

(7) After the signal reception element 100 of the signaling transfer device receives the registration message, the address mapping table creation element 200 creates an address mapping table in accordance with the address information carried in the registration message, and the signaling transfer element 300 transfers the registration message to the control and call agent 400 in accordance with the address mapping relationships in the address mapping table;

(8) Upon receipt of the registration message, the control and call agent 400 returns a 200 OK message to the signaling transfer device, where an original server source address ② is changed into the server destination address, and an original server destination address ⑦ is changed into the server source address;

(9) Upon arrival of the 200 OK message at the signaling transfer device, the signaling transfer device determines a match of the 200 OK message with a downstream address mapping table created previously, replaces the addresses in the message header, in other words, the original client source address ③ is changed into the client destination address, and the original client destination address ① is changed into the client source address, and transfers the message to the NAT device.

(10) The NAT device performs address conversion, thereby changing the client destination address from ③ to ⑥, and the 200 OK message is transferred to the UE.

(11) The control and call agent 400 sends a control policy to the signaling transfer element 300 of the signaling transfer device, which control policy is defined specifically in accordance with factors such as a call status and a link status, so as to control to the signaling transfer element 300 to discard or transfer the message;

(12) Upon receipt of the control policy, the signaling transfer element 300 returns to the control and call agent 400 a reply message indicating receipt of a control policy message;

(13) In accordance with the obtained SIP server addresses, the UE 500 sends a call message to the SIP server, and a header of the call message carries a client source address being ⑥ and its corresponding port, and a client destination address being ① and its corresponding port;

(14) Source NAT conversion is performed on the call message passing through the NAT device 700, so that the client source address in the message header is changed to ③, and the client destination address remains unchanged;

(15) Upon arrival of the call message at the signaling reception element 100, a match of the call message with the address mapping table created in the step (7) is determined, and the call message is transferred to the control and call agent 400 through the signaling transfer element 300;

(16) Upon receipt of the call message, the control and call agent 400 returns a 200 OK message to the signaling transfer element, where the original server source address ② is changed into the server destination address, and the original server destination address ⑦ is changed into the server source address;

(17) Upon arrival of the 200 OK message at the signaling transfer element, a match of the 200 OK message with the downstream address mapping table created in the step (7) is determined, and the addresses in the message header is replaced, in other words, the original client source address ③ is changed into the client destination address, and the original client destination address ① is changed into the client source address, and the message is transferred to the NAT device.

(18) The NAT device 700 performs address conversion, thereby changing the client destination address from ③ to ⑥, and the 200 OK message is transferred to the UE 500. In the embodiments of the invention, the signaling transfer device is triggered to create the address mapping table after the registration message is sent, thereby avoiding a failure in the signaling transfer due to a source IP address change after the signaling passes through the NAT device when the NAT device is present between the UE and the signaling transfer device.

In the embodiments of the invention, the signaling transfer device is triggered to create the address mapping table after the registration message is sent, thereby avoiding a failure in the signaling transfer due to a source IP address change after the signaling passes through the NAT device when the NAT device is present between the UE and the signaling transfer device.

Further, the signaling transferring device is triggered to create the address mapping table after the registration message is sent, where the IP addresses carried in the registration message also include corresponding port information, and additional address mapping table may be created for other signaling with the same addresses and different ports, thereby avoiding such a phenomenon that signaling transfer may fail due to a signaling mismatch when the control and call agent for signaling transfer device transfers a downstream session to the signaling transfer device.

Furthermore, in the embodiments of the invention, the control and call agent for signaling transfer device delivers a policy to the signaling transfer device during the transfer of a call request message, so as to prevent the call request message during the transfer from being attacked.

The foregoing descriptions have explained the inventive signaling transfer method and device in detail, and the principle and embodiments of the invention have been set forth in the descriptions by way of the specific examples. The above descriptions of the embodiments are merely intended to facilitate understanding of the inventive method and the essential spirit thereof. Also it will be apparent to those skilled in the art that modifications can be made to the embodiments and their application scopes in light of the spirit of the invention. Summarily, the descriptions shall not be taken as limiting the scope of the invention.

## Claims

1. A signaling transfer method, comprising:
creating, by a signaling transfer device, an address mapping table in accordance with address information carried in a registration message upon receipt of the registration message; and
transferring signaling in accordance with the address mapping table.

2. The signaling transfer method according to claim 1, wherein the address information comprises port information.

3. The signaling transfer method according to claim 2, wherein the address mapping table is created through:
acquiring a client source address and a client destination address in a header of the registration message;
allocating a server source address and a server destination address; and
creating upstream and downstream address mapping tables through the correspondence between the server addresses and the respective client addresses.

4. The signaling transfer method according to claim 3, wherein the upstream and downstream address mapping tables are created through:
creating the upstream address mapping table in accordance with correspondence relationships in which the server source address corresponds to the client source address and the server destination corresponds to the client destination address; and
creating the downstream address mapping table in accordance with correspondence relationships in which the client source address corresponds to the server source address and the client destination corresponds to the server destination address.

5. The signaling transfer method according to claim 1, 2, 3 or 4, wherein the addresses in the address mapping table are IP addresses.

6. The signaling transfer method according to claim 1 or 2, wherein when the signaling is a call message, the method further comprises:
receiving a control policy, and discarding or transferring the signaling in accordance with the control policy.

7. The signaling transfer method according to claim 6, wherein transferring the signaling in accordance with the address mapping table comprises: determining a match with the address mapping table, and transferring the signaling.

8. A signaling transfer device, comprising:
a signaling reception element adapted to receive signaling comprising a registration message and a call message;
an address mapping table creation element adapted to create an address mapping table in accordance with address information carried in the registration message; and
a signaling transfer element adapted to transfer the signaling in accordance with the address mapping table.

9. The signaling transfer device according to claim 8, wherein the address information comprises port information.

10. The signaling transfer device according to claim 9, wherein the address mapping table creation element comprises:
a client address acquisition element adapted to acquire a client source address and a client destination address in a header of the registration message in accordance with the registration message received by the signaling reception element;
a server address allocation element adapted to allocate a server source address and a server destination address; and
an address mapping element adapted to create upstream and downstream address mapping tables through correspondence between the server addresses and the respective client addresses.

11. The signaling transfer device according to claim 10, wherein the address mapping element comprises:
an upstream address mapping sub-element adapted to create the upstream address mapping table in accordance with correspondence relationships in which the server source address corresponds to the client source address and the server destination address corresponds to the client destination address; and
a downstream address mapping sub-element adapted to create the downstream address mapping table in accordance with correspondence relationships in which the client source address corresponds to the server source address and the client destination address corresponds to the server destination address.

12. The signaling transfer device according to claim 8, 9, 10 or 11, wherein the addresses in the address mapping table created by the address mapping creation element are IP addresses.

13. A signaling transfer system comprising a UE, a Dynamic Host Configuration Protocol server, and a Network Address Translation device, where the system further comprises a signaling transfer device comprising:
a signaling reception element adapted to receive signaling comprising a registration message and a call message from the UE;
an address mapping table creation element adapted to create an address mapping table in accordance with address information carried in the registration message; and
a signaling transfer element adapted to transfer the signaling in accordance with the address mapping table.

14. The signaling transfer system according to claim 13, further comprising:
a control and call agent adapted to receive a control policy and to deliver the control policy to the signaling transfer element.

15. The signaling transfer system according to claim 14, wherein the address information comprises port information.

16. The signaling transfer system according to claim 15, wherein the address mapping table creation element comprises:
a client address acquisition element adapted to acquire a client source address and a client destination address in a header of the registration message in accordance with the registration message received by the signaling reception element;
a server address allocation element adapted to allocate a server source address and a server destination address; and
an address mapping element adapted to create upstream and downstream address mapping tables through correspondence between the server addresses and the respective client addresses.

17. The signaling transfer system according to claim 16, wherein the address mapping element comprises:
an upstream address mapping sub-element adapted to create the upstream address mapping table in accordance with correspondence relationships in which the server source address corresponds to the client source address and the server destination address corresponds to the client destination address; and
a downstream address mapping sub-element adapted to create the downstream address mapping table in accordance with correspondence relationships in which the client source address corresponds to the server source address and the client destination address corresponds to the server destination address.

18. The signaling transfer system according to claim 13, 14, 15, 16 or 17, wherein the addresses in the address mapping table created by the address mapping creation element are IP addresses.
